# EUROPEAN PATENT SPECIFICATION

(11) **EP 2 292 916 B1**
(45) Date of publication and mention of the grant of the patent: **26.09.2012**
(21) Application number: 09172425.2
(22) Date of filing: 07.10.2009
(51) Int. Cl.: F02M 21/02, F16K 15/14

(54) **Return valve for LPI vehicle adapted to gas vehicle**
Rückschlagventil für auf ein Gasfahrzeug angepasstes Flüssiggaseinspritzungs-Fahrzeug
Soupape de retour pour véhicule LPI adapté à un véhicule au gaz

(30) Priority: 21.07.2009 KR 20090066462
(43) Date of publication of application: 09.03.2011
(73) Proprietor: Motonic Corporation, Seoul 110-170 (KR)
(72) Inventor: Shin, Yong Nam, 704-729 Daegu (KR); Chang, Woo Deok, 704-200 Daegu (KR); Lee, Byoung Joo, Daegu 704-140 (KR); Kang, Myung Kwon, 704-200 Daegu (KR)
(74) Representative: Isarpatent

(56) References cited:
- WO-A1-88/09867
- DE-A1-102005 035 177
- US-A- 4 711 224
- US-A- 5 027 784
- US-A1- 2005 081 832

## Description

### BACKGROUND OF THE INVENTION

### 1. Field of the Invention

The present invention relates to a return valve adapted to an LPI system for a gas vehicle, and more particularly to a return valve adapted to an LPI system for a gas vehicle, capable of reducing noise caused by chattering phenomenon occurring when gas fuel is introduced by improving the shape of a disk in a gas vehicle in which fuel is injected in a liquid phase by compressing gas fuel.

### 2. Description of the Related Art

US 2005/0081832 A1 describes a fuel feeding system for an LPI engine which is made to allow fuel remaining inside a fuel supply line and a fuel return line to be drained into a bombe by bypassing a pressure regulator while an engine gets cooler after operation, whereby the fuel can be saved from external leakage via a fuel injector, and contaminants are reduced while the engine is running, resulting in improved maintenance of the engine during an engine overhaul.

US 4,711,224 describes a check valve for disposition between a vacuum operated device and the intake of an auxiliary vacuum pump of an automobile which discharges into the crankcase of the engine of the vehicle. The check valve includes an elastomeric umbrella valve having a flexible lip which is self-biased to a closed position preventing backflow of air to the vacuum operated device and which is flexed to a normal open position by a pressure difference corresponding to pump operation with the integrity of the auxiliary vacuum system intact.

DE 10 2005 035 177 A1 describes a fuel check valve for a motor vehicle comprising a valve component in a spool flow chamber, a nozzle component with nozzle orifices, and a valve spool built into the spool flow chamber for the linear movement between the nozzle component and inlet of the flow chamber in order to open and close the inlet. A guide rod protrudes from the valve spool in the direction of the nozzle component and is fitted in a guide hole for the guiding of the linear movement of the valve spool.

WO 88/09867 describes a fuel injection system including a fuel tank having an electric pump, a fuel injector, lines, for circulating gasoline from the fuel tank to the injector and back to the fuel tank and an umbrella check valve between the pump and the fuel injector.

Generally, a liquid petroleum injection (LPI) system for a gas vehicle does not use a mechanical LPG fuel injection scheme using the pressure of a fuel tank, but employs a structure in which a fuel tank is installed in a bombe, and liquid fuel is injected through an injector at a high pressure of 5bar to 15bar by the fuel pump so that an engine is driven.

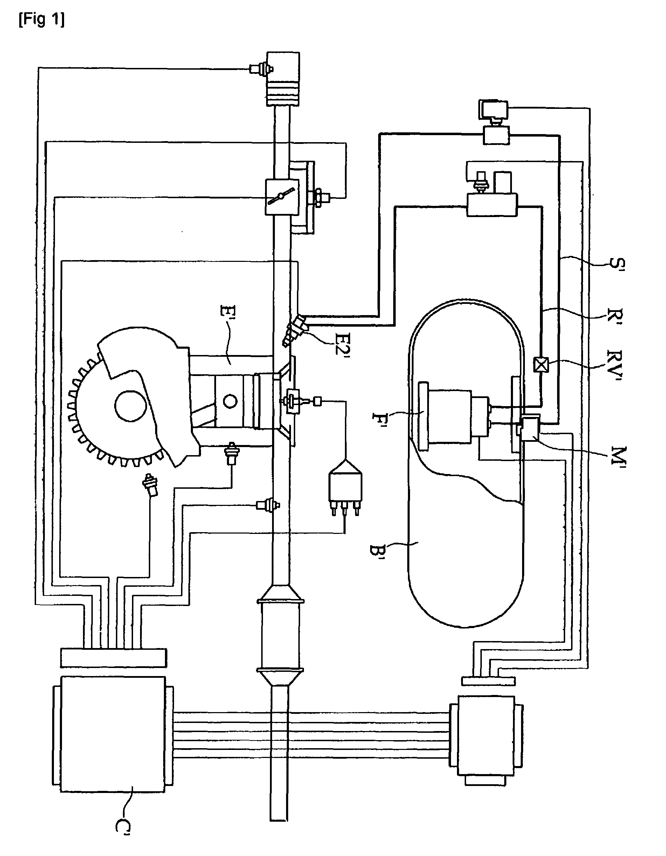

FIG. 1 is a view showing an LPI system for a gas vehicle.

As shown in FIG. 1, the conventional LPI system includes a bombe B' having gas fuel stored therein, a pump module pumping and delivering the gas fuel stored in the bombe B', and an engine E' driven by injecting liquid fuel, which is supplied by the pump module, through an injector E2'.

The pump module includes a multi-valve M' installed in the bombe B' and a fuel pump F' connected to a fuel supply line S' and pumping gas fuel. The fuel pump F' is controlled by an electronic control unit (ECU) C'.

Fuel that is unused in the engine E' is retrieved into the bombe B' through a fuel retrieve line R'. A one-way return valve RV' is mounted on the connection portion of the bombe B' and the fuel retrieve line R1.

However, according to the related art, when gas fuel is introduced, the return valve RV' may vibrate, called "chattering phenomenon".

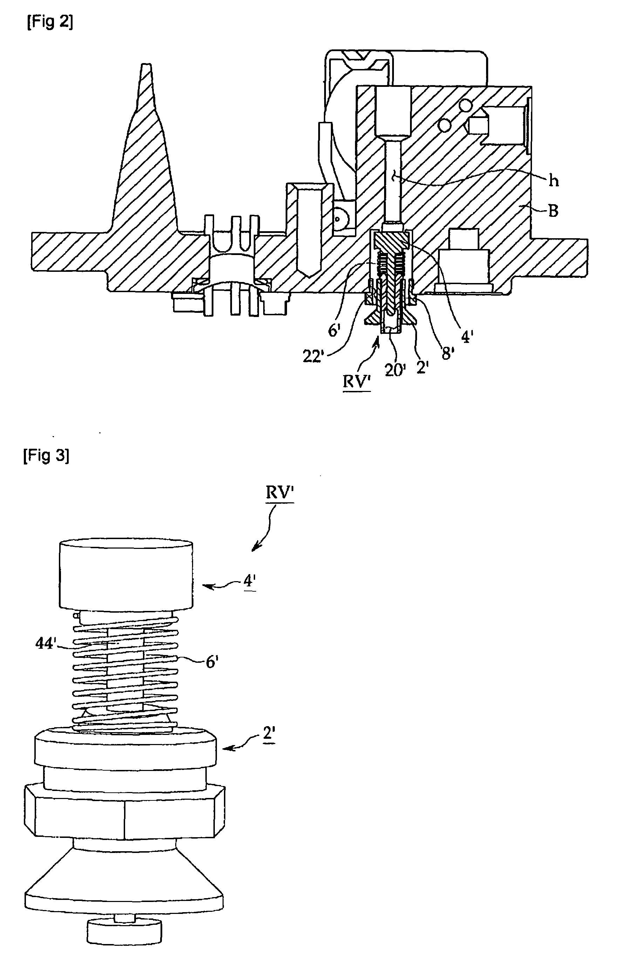

Hereinafter, the cause of the chattering phenomenon will be described with reference to FIGS. 2 to 5.

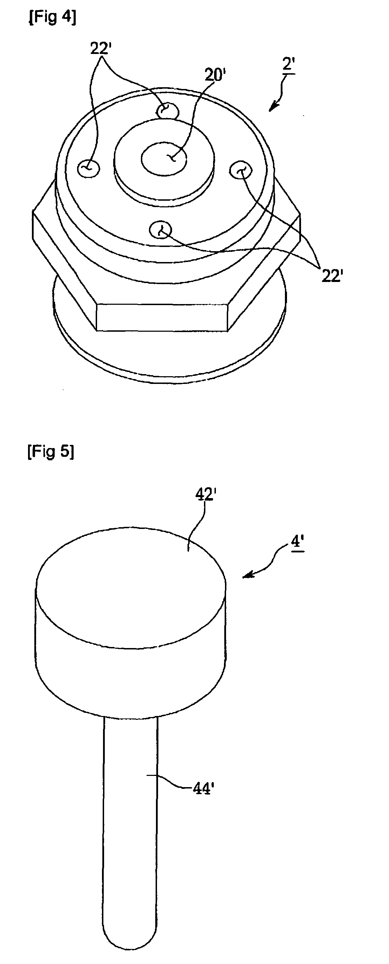

FIG. 2 is a view showing a return valve of the LPI system according to the related art, and FIG. 3 is a view showing the assembly of the return valve RV' shown in FIG. 2. FIG. 4 is a view showing a nipple 2' of FIG. 3, and FIG. 5 is a view showing a disk unit 4' of FIG. 3.

As shown in FIGS 2 to 5, the return valve RV' is connected to a body B formed with a through hole H for the flow of fuel so that the flow of the fuel can be controlled. The return valve RV' includes the nipple 2', the disk unit 4', a spring 6', and a sleeve 8'. The nipple 2' is provided at a central portion thereof with a valve hole 20' and provided on an outer circumference portion thereof with a plurality of injection holes 22' in a radial direction. The disk unit 4' is provided at a lower portion thereof with a rod 44' and provided at an upper portion thereof with a disk unit 42' such that the rod 44' is inserted into the valve hole 20' to closely make contact with the through hole H. The spring 6' is interposed between the nipple 2 and the disk unit 4'. The sleeve 8' surrounds the valve hole 20' and the rod 44'.

Each injection hole 22' has a diameter smaller than that of the valve hole 20'.

In the return valve RV' having the above structure according to the related art, after fuel has been introduced into the through hole h by pressing force exerted from an upper portion of the body B or suction force generated from a lower portion of the body B, the fuel is injected through the injection holes 22' while pressing the disk unit 4' downward.

However, since liquid and gas fuel are simultaneously retrieved from the engine E' to the bombe B' through the return valve RV', the return valve RV' having the above structure causes the chattering phenomenon of vibrating the disk unit 4' supported by the spring 6' when the gas fuel is introduced.

Such chattering phenomenon may cause loud noise inside the bombe B1. In serious case, the noise may be introduced into an interior of a vehicle due to resonance.

### SUMMARY OF THE INVENTION

Accordingly, the present invention has been made keeping in mind the above problems occurring in the prior art, and an object of the present invention is to provide a return valve for a gas vehicle, capable of suppressing noise by minimizing chattering phenomenon when gas fuel is introduced.

To accomplish these objects, according to claim 1, there is provided a return valve adapted to an LPI system for a gas vehicle. The return valve includes a body provided at one side thereof with an inlet passage such that fuel is introduced, and provided at an opposite side thereof with an outlet passage, a seat groove formed in the body such that the inlet passage communicates with the outlet passage, a coupling member coupled with an internal upper portion of the seat groove, and including a plate part having a through hole formed at a central portion thereof and a plurality of fine holes formed around the through hole, a disk unit which closely makes contact with the plate part of the coupling member to close the fine holes, and a partition member provided on a central top surface thereof with a supporting member to support a central lower portion of the disk unit, and provided with a plurality of fluid holes allowing fuel to pass through an outside of the supporting member.

As described above, even if gas fuel is retrieved from the engine to the bombe, chattering phenomenon can be reduced so that noise can be suppressed.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a view showing an LPI system according to the related art;
FIG. 2 is a view showing a return valve of an LPI system for a gas vehicle according to the related art;
FIG. 3 is a view showing the assembly of the return valve of 2;
FIG. 4 is a view showing a nipple of FIG. 3;
FIG. 5 is a view showing a disk unit of FIG. 3;
FIG. 6 is a view showing a return valve adapted to an LPI system for a gas vehicle not being part of the present invention;
FIG. 7 is an enlarged view showing a part A of FIG. 6;
FIG. 8 is a view showing a return valve adapted to an LPI system for a gas vehicle according to the present invention; and
FIG. 9 is an exploded view showing a portion of the return valve adapted to the LPI system for the gas vehicle of FIG. 8.

### DETAILED DESCRIPTION OF THE INVENTION

Hereinafter, preferred embodiments of the present invention will be described in detail with reference to accompanying drawings.

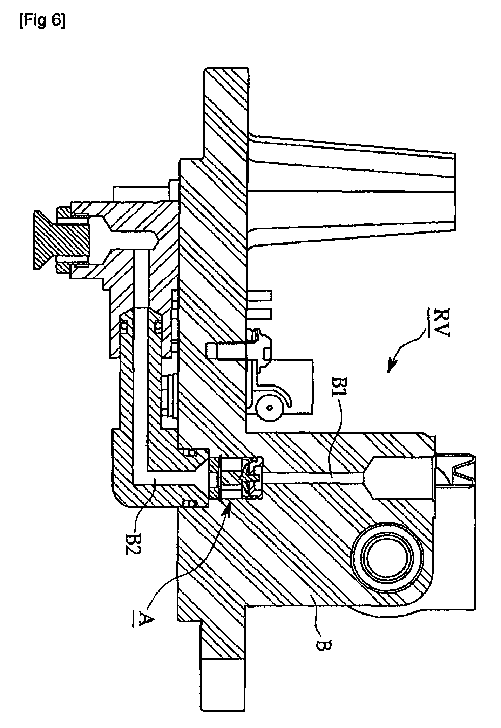

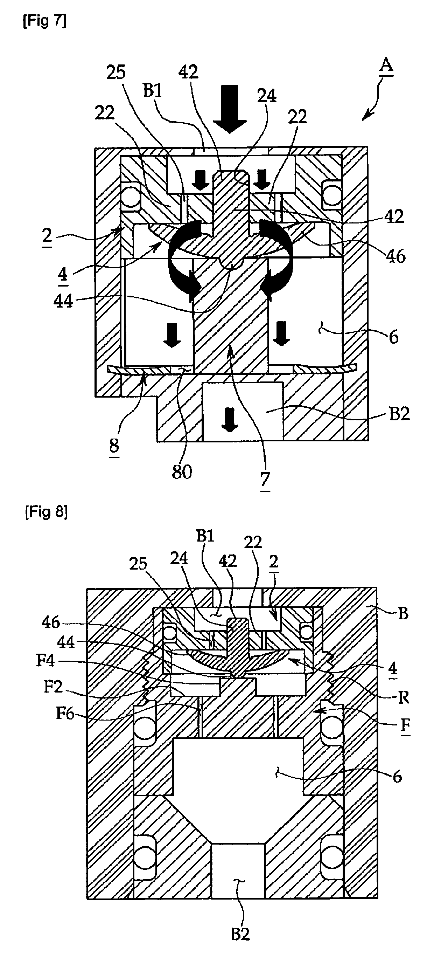

FIG. 6 is a view showing a return valve RV adapted to a liquid petroleum injection (LPI) system for a gas vehicle not being part of the present invention. FIG. 7 is an enlarged view showing a part A of FIG. 6.

Referring to FIGS. 6 and 7, the return valve RV adapted to the LPI system for the gas vehicle not being part of the present invention includes a body B, which is provided at one side thereof with an inlet passage B1 such that fuel is introduced and provided at the other side thereof with an outlet passage B2 such that fuel is discharged, a seat groove 6 formed in the body B such that the inlet passage B1 communicates with the outlet passage B2, a coupling member 2, which is coupled with an internal upper portion of the seat groove 6, and includes a plate part 22 having a through hole 24 formed at a central portion thereof and a plurality of fine holes 25 formed around the through hole 24, a disk unit 4, which closely makes contact with the plate part 22 of the coupling member 2 to close the fine holes 25, and a partition member 8, which is provided on a central top surface thereof with a supporting member 7 to support a central lower portion of the disk unit 4, and provided with a plurality of fluid holes 80 such that fuel passes through an outside of the supporting member 7.

As shown in FIG. 7, the disk unit 4 includes a rod 42, which protrudes upward from a central upper portion of the disk unit 4 such that the rod 42 is inserted into the through hole 24 of the coupling member 2, a protrusion 44, which protrudes downward from a central lower portion of the disk unit 4, and a blade 46, which is fitted around the rod 42 in a circular shape and configured as an inverse umbrella shape. The blade 46 has a thickness gradually reduced toward an end from the center of the blade 46, and makes contact with a bottom surface of the coupling member 2.

The blade 6 is made of synthetic resin having elasticity. For example, the blade 6 is made of polyurethane or silicon.

Hereinafter, the assembly and operation assembly of the return valve RV will be described.

The rod 42 of the disk unit 4 is inserted into the through hole 24 of the coupling member 2 so hat the blade 46 makes contact with a bottom surface of the plate part 22.

Thereafter, the partition member 8 is inserted into the seat groove 6 such that the supporting member 7 can support the lower portion of the disk unit 4.

Then, after fuel has been introduced through the inlet passage B1, the fuel passes the plate part 22 through the fine holes 25, and then flows while pushing the blade 46 downward.

A sold arrow of FIG. 7 represents the flowing direction of the fuel.

After the fuel has passed the blade 46, the blade 46 is returned to an original position due to elasticity.

In details, the protrusion 44 of the disk unit 4 is supported by the supporting member 7. Accordingly, when the fuel that has been introduced from the upper portion of the return valve RV pushes the blade 46 downward, the disk unit 4 is maintained in an original position, and only the blade 46 is turned downward.

If fuel does not flow, the blade 46 is returned to the original position thereof due to restoring force derived from elasticity and maintains an inverse-umbrella shape.

Thereafter, the fuel is discharged to the outlet passage B2 through the fluid hole 80 of the partition member 8.

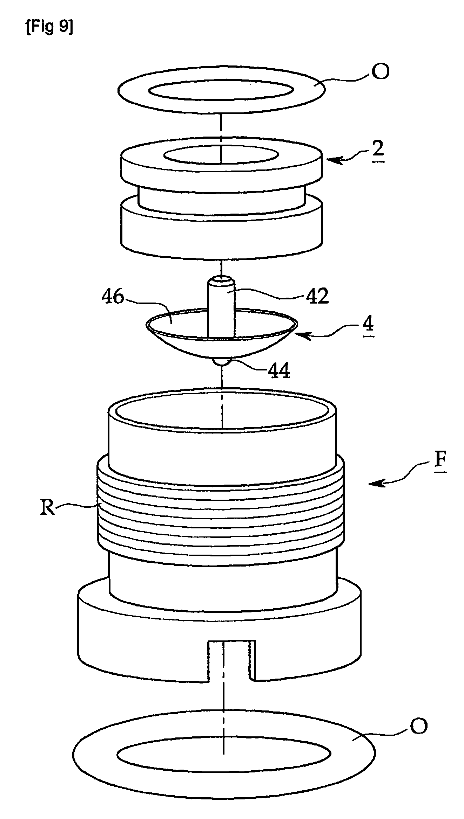

FIG. 8 is a view showing a return valve adapted to an LPI system for a gas vehicle according to the present invention, and FIG. 9 is an exploded view showing a portion of the return valve adapted to the LPI system for the gas vehicle of FIG. 8.

As shown in FIGS. 8 and 9, the return valve adapted to the LPI system for the gas vehicle according to the present invention includes an inlet passage B1 allowing fuel to be introduced, an outlet passage B2 allowing fuel to be discharged, a body B, which includes a seat groove 6 such that the inlet passage B1 communicates with the outlet passage B2, a coupling member 2, which is coupled with an internal upper portion of the seat groove 6, and includes a plate part 22 having a through hole 24 formed at a central portion thereof and fine holes 25 formed around the through hole 24, a disk unit 4, which closely makes contact with the plate part 22 of the coupling member 2 to close the fine holes 25, and a bush F, which is rested in the seat groove 6 and coupled with the coupling member 2 such that the coupling member 2 is received in the bush F, and includes a partition member F2 horizontally formed therein, a step F4 formed on a central top surface of the partition member F2 to support a bottom surface of the disk unit 4, and a plurality of fluid holes F6 allowing fuel to pass therethrough.

Since the coupling member 2 and the disk unit 4 according to the present embodiment are identical to those according to the previous embodiment in terms of shapes thereof, details thereof will be omitted in order to avoid redundancy. Reference sign O of FIG. 9 represents a sealing O-ring. The bush F employs a screw-coupling scheme.

In other words, an outer circumferential surface of the bush F and an inner circumferential surface of the seat groove 6 have screw parts R such that the bush F is screwed with the seat groove 6.

Hereinafter, the assembly relation of the return valve adapted to the LPI system for the gas vehicle according to another embodiment of the present invention will be described.

After the rod 42 of the disk unit 4 has been inserted into the through hole 24 of the coupling member 2, this assembly is inserted into the bush F.

The protrusion 44 of the disk unit 4 makes contact with a top surface of the step F4 of the bush F.

Then, after the bush F has been inserted into the seat groove 6 of the body B, the screw parts R are coupled with each other.

Hereinafter, the operational relation of the return valve according to the present invention will be described.

Then, after fuel has been introduced from the inlet passage B1, the fuel passes through the fine holes 25, and then flows while pushing the blade 46 downward.

After the fuel has passed the blade 46, the blade 46 is returned to an original position due to elasticity.

In details, the protrusion 44 of the disk unit 4 is supported by the supporting member 7. Accordingly, when the fuel that has been introduced from the upper portion of the return valve pushes the blade 46 downward, the disk unit 4 is maintained in an original position, and only the blade 46 is turned downward.

Thereafter, the fuel is discharged to the outlet passage B2 through the fluid hole F6 of the bush F.

Although the present invention has been described for illustrative purposes, those skilled in the art will appreciate that various modifications, additions and substitutions are possible, without departing from the scope of the invention as disclosed in the accompanying claims.

## Claims

1. A return valve (RV) adapted to an LPI system for a gas vehicle, the return valve (RV) comprising:
an inlet passage (B1) through which fuel is introduced and an outlet passage (B2) through which fuel is discharged;
a body (B) which includes a seat groove (6) such that the inlet passage (B1) communicates with the outlet passage (B2);
a coupling member (2) coupled with an internal upper portion of the seat groove (6), and including a plate part (22) having a through hole (24) formed at a central portion thereof and a plurality of fine holes (25) formed around the through hole (24);
a disk unit (4) which closely makes contact with the plate part (22) of the coupling member (2) to close the fine holes (25); and
a bush (F) rested in the seat groove (6) and coupled with the coupling member (2) such that the coupling member (2) is received in the bush (F), and including a partition member (F2) horizontally formed therein, a step (F4) formed on a central top surface of the partition member (F2) to support a bottom surface of the disk unit (4), and a plurality of fluid holes (F6) allowing fuel to pass therethrough,
**characterized in that**
the bush (F) is formed at an outer peripheral surface thereof with a screw part, and the seat groove (6) is formed at an inner peripheral surface thereof with a screw part such that the bush (F) is screwed with the seat groove (6).

2. The return valve (RV) of claim 1, wherein the disk unit (4) comprises:
a rod (42) which protrudes upward from a central upper portion of the disk unit (4) such that the rod (42) is inserted into the through hole (24) of the coupling member (2);
a protrusion (44) which protrudes downward from a central lower portion of the disk unit (4); and
a blade (46) fitted around the rod (42) in a circular shape, configured as an inverse umbrella shape, and formed with a thickness gradually reduced toward an end from a center of the blade (46) while making contact with a bottom surface of the coupling member (2).

3. The return valve (RV) of claim 2, wherein the blade (42) includes synthetic resin having elasticity.

4. The return valve of claim 2, wherein the blade (42) includes polyurethane or silicon.

## Patentansprüche

1. Rückschlagventil (RV), das an ein Flüssiggaseinspritzsystem für ein Gasfahrzeug angepasst ist, wobei das Rückschlagventil (RV) Folgendes umfasst:
- einen Einlasskanal (B1), durch den Kraftstoff eingeleitet wird, und einen Auslasskanal (B2), durch den Kraftstoff abgelassen wird;
- einen Korpus (B), der eine Sitznut (6) enthält, dergestalt, dass der Einlasskanal (B1) mit dem Auslasskanal (B2) in Strömungsverbindung steht;
- ein Kopplungselement (2), das mit einem inneren oberen Abschnitt der Sitznut (6) gekoppelt ist und einen Plattenteil (22) enthält, in dessen mittigem Abschnitt ein Loch (24) ausgebildet ist und mehrere feine Löcher (25) um das Durchgangsloch (24) herum ausgebildet sind;
- eine Scheibeneinheit (4), die einen unmittelbaren Kontakt zu dem Plattenteil (22) des Kopplungselements (2) hat, um die feinen Löcher (25) zu schließen; und
- eine Buchse (F), die in der Sitznut (6) ruht und mit dem Kopplungselement (2) dergestalt gekoppelt ist, dass das Kopplungselement (2) in der Buchse (F) aufgenommen ist, und die Folgendes enthält: ein Trennwandelement (F2), das horizontal in ihr ausgebildet ist, eine Stufe (F4), die an einer mittigen Oberseite des Trennwandelements (F2) ausgebildet ist, um eine Unterseite der Scheibeneinheit (4) zu stützen, und mehrere Fluidlöcher (F6), durch die Kraftstoff hindurchströmen kann,
**dadurch gekennzeichnet, dass**
die Buchse (F) an ihrer Außenumfangsfläche mit einem Schraubteil versehen ist und die Sitznut (6) an ihrer Innenumfangsfläche mit einem Schraubteil versehen ist, dergestalt, dass die Buchse (F) mit der Sitznut (6) verschraubt wird.

2. Rückschlagventil (RV) nach Anspruch 1, wobei die Scheibeneinheit (4) Folgendes umfasst:
- eine Stange (42), die von einem mittigen oberen Abschnitt der Scheibeneinheit (4) dergestalt aufwärts hervorsteht, dass die Stange (42) in das Durchgangsloch (24) des Kopplungselements (2) eingeführt wird;
- einen Vorsprung (44), der von einem mittigen unteren Abschnitt der Scheibeneinheit (4) abwärts hervorsteht; und
- einen Teller (46), der um die Stange (42) herum kreisförmig ausgebildet ist, eine umgekehrte Regenschirmform aufweist und eine Dicke hat, die von einer Mitte des Tellers (46) in Richtung eines Endes schrittweise abnimmt, während er eine Unterseite des Kopplungselements (2) berührt.

3. Rückschlagventil (RV) nach Anspruch 2, wobei der Teller (42) ein Kunstharz mit Elastizität enthält.

4. Rückschlagventil nach Anspruch 2, wobei der Teller (42) Polyurethan oder Silikon enthält.

## Revendications

1. Soupape de retour (RV) adaptée à un système LPI pour un véhicule au gaz, la soupape de retour (RV) comprenant :
- un passage d'admission (B1) à travers lequel le carburant est introduit et un passage de sortie (B2) à travers lequel le carburant est déchargé ;
- un corps (B) qui comprend une rainure d'assise (6) de telle sorte que le passage d'admission (B1) communique avec le passage de sortie (B2) ;
- un élément d'accouplement (2) accouplé avec une partie supérieure intérieure de la rainure d'assise (6), et comprenant une partie plaque (22) ayant un trou traversant (24) formé au niveau de la partie centrale d'une pluralité de petits trous (25) formés autour du trou traversant (24) ;
- une unité de disque (4) qui établit un contact étroit avec la partie plaque (22) de l'élément d'accouplement (2) pour obturer les petits trous (25) ; et
- une bague (F) intégrée dans la rainure d'assise (6) et accouplée avec l'élément d'accouplement (2) de telle sorte que l'élément d'accouplement (2) se loge dans la bague (F), et comprenant un élément de cloisonnement (F2) y étant formé horizontalement, un pas (F4) formé sur une surface supérieure centrale de l'élément de cloisonnement (F2) pour soutenir une surface inférieure de l'unité de disque (4), et une pluralité de trous à fluide (F6) permettant le passage du carburant,
**caractérisée par le fait que** la bague (F) est formée, au niveau de sa surface périphérique extérieure, d'une partie vis, et la rainure d'assise (6) est formée, au niveau de sa surface périphérique intérieure, d'une partie vis de telle sorte que la bague (F) est vissée avec la rainure d'assise (6).

2. Soupape de retour (RV) selon la revendication 1, dans laquelle l'unité de disque (4) comprend :
- une tige (42) qui fait saillie vers le haut depuis une partie supérieure centrale de l'unité de disque (4) de telle sorte que la tige (42) est insérée dans le trou traversant (24) de l'élément d'accouplement (2) ;
- une protubérance (44) qui fait saillie vers le bas depuis une partie centrale inférieure de l'unité de disque (4) ; et
- une lame (46) fixée autour de la tige (42) dans une forme circulaire, configurée sous la forme d'un parapluie inversé, et formée d'une épaisseur graduellement réduite vers une extrémité depuis un centre de la lame (46) tout en établissant un contact avec une surface inférieure de l'élément d'accouplement (2).

3. Soupape de retour (RV) selon la revendication 2, dans laquelle la lame (42) comprend de la résine synthétique présentant une certaine élasticité.

4. Soupape de retour selon la revendication 2, dans laquelle la lame (42) comprend du polyuréthane ou de la silicone.
